# FASCICULE DE BREVET EUROPEEN

(11) **EP 0 780 079 B1**
(45) Date de publication et mention de la délivrance du brevet: **02.02.2000**
(21) Numéro de dépôt: 96440099.8
(22) Date de dépôt: 21.11.1996
(51) Int. Cl.: A47J 31/24, A47J 31/46, A47J 31/00

(54) **Unité individuelle de préparation et de distribution du café pour machine à café du type dit "expresso"**
Individuelle Einheit zur Herstellung und Verabreichung von Kaffee, für eine Espressokaffeemaschine
Individual unit for preparation and distribution of coffee, for a coffee machine of the 'espresso'type

(30) Priorité: 21.12.1995 FR 9515773; 21.12.1995 FR 9515774
(43) Date de publication de la demande: 25.06.1997
(73) Titulaire: RENEKA INTERNATIONAL, 67120 Duttlenheim (FR)
(72) Inventeur: Zanin, Yvano, 67120 Molsheim (FR); Farrugia, Jean-Paul, 67310 Scharrachbergheim (FR)
(74) Mandataire: Metz, Paul

(56) Documents cités:
- EP-A- 0 228 760
- EP-A- 0 577 561
- WO-A-91/07898
- DE-A- 3 838 235
- DE-U- 8 816 009
- FR-A- 2 544 185
- FR-A- 2 713 071

## Description

L'invention se rapporte à une unité individuelle de préparation et de distribution du café pour machine à café du type dit "expresso" comprenant un groupe d'injection à structure simplifiée associé à une chaudière individuelle propre à ce poste de préparation rendant ainsi ce poste de préparation fonctionnellement indépendant.

Une machine à café complète multipostes en vue de la préparation du café dit "expresso" est formée par la juxtaposition d'une pluralité d'unités ou de postes de préparation.

Les machines à café multipostes visées par l'invention comportent en général une chaudière unique commune aux différents postes de préparation du café et à la production d'eau chaude ou de vapeur délivrée séparément par une tête plongeuse pour les besoins extérieurs en eau chaude et en vapeur.

L'eau destinée à chaque groupe suit un conduit qui traverse un doigt de gant ou une cartouche plongeant dans le corps de la chaudière.

La chaudière comporte en général autant de cartouches qu'il existe de postes de préparation du café.

L'eau chaude vient ensuite alimenter un circuit individuel de préparation présentant une vanne de commande suivie d'un groupe d'injection du café, formé d'un bloc mécanique traversé par l'eau chaude et servant de support au porte-coupe.

Ce bloc mécanique d'injection présente une saillie centrale s'étendant vers le bas. Cette saillie constitue le bloc de "tassement" du café et porte le joint d'étanchéité et l'ensemble de diffusion appelé douchette. Cette saillie est conformée en partie centrale dans le bloc mécanique d'injection puis usinée.

Outre le coût de la matière constituant ce support et sa complexité mécanique qui augmentent son prix de revient, il présente d'autres inconvénients liés au maintien de la température idéale pour la préparation du café.

L'eau chauffée par la chaudière, après un éventuel mélange thermostaté avec de l'eau froide, vient alimenter chaque poste d'injection.

Pour ce faire, elle traverse les pièces mécaniques constituant le poste de préparation et le support du groupe d'injection pour arriver à la température souhaitée au point d'injection.

L'inertie des masses métalliques entourant le canal intérieur le long duquel passe l'eau avant son injection apporte une contribution défavorable à la régulation.

En effet, si cette inertie thermique permet d'obtenir des conditions à peu près satisfaisantes pour un régime permanent de production moyenne de doses de café en quantité et en cadence, il en va tout autrement lors d'un usage intensif, comme on peut le rencontrer en période de pointe dans les brasseries, cafés, restaurants et autres débits de boissons.

Ainsi, en usage intensif, c'est-à-dire en continu et à haute cadence, les cafés préparés successivement deviennent systématiquement tous brûlants après un certain nombre.

Inversement, la production de cafés en début de mise en chauffe ne permet pas de trouver rapidement les conditions optimales de préparation du café pouvant exister pendant le régime permanent.

Certains constructeurs ont remédié à cet inconvénient par l'isolation thermique des pièces massives de liaison entre la chaudière et chaque groupe d'injection ou en réalisant ces pièces creuses pour faire circuler l'eau chaude de la chaudière à l'intérieur de celles-ci.

Malheureusement ces modifications, aussi bien l'une que l'autre, n'apportent qu'une faible amélioration.

Toutes ces techniques antérieures présentent l'inconvénient important de délivrer à un certain moment dans le régime de haute cadence d'utilisation de l'eau, soit trop, soit pas assez d'eau chaude au niveau des postes d'injection.

En effet, l'eau chaude transmet ses calories aux pièces massives de la liaison chaudière-groupe d'injection qui, portées à une certaine température par un débit plus important d'eau chaude, restent à une température voisine de celle-ci, car chauffées en permanence. L'eau devient alors trop chaude en sortie car sa température de départ de la chaudière est réglée pour un régime intermittent avec pertes calorifiques sur le trajet de la chaudière au groupe d'injection correspondant.

Ainsi, et toujours en usage intensif, la température de sortie de l'eau chaude s'avère trop élevée pour assurer, lors de son passage dans la mouture, des conditions optimales de libération des arômes nécessaires à la préparation d'un bon café.

Ce mode de transfert de l'eau chaude ne garantit pas, pour les diverses conditions d'utilisation, la fourniture d'un café de qualité.

Pour remédier à cet inconvénient, on a prévu de diminuer, de limiter et de réguler la température de l'eau fournie aux groupes d'injection du café en vue d'obtenir, au niveau de la préparation, une eau à température optimale et constante totalement indépendante des conditions d'utilisation, par un organe mélangeur d'eau froide placé sur le conduit amenant l'eau chaude de la cartouche à chaque poste d'injection.

Cet organe mélangeur d'eau froide comprend une voie principale d'eau chaude et une entrée d'eau froide mélangée en quantité variable avec l'eau chaude pour délivrer en sortie une eau à la température souhaitée, inférieure à celle de l'eau chaude présente à la sortie de la cartouche.

Cet organe mélangeur est placé de préférence à proximité du poste d'injection et constitué par exemple par un mitigeur thermostatique avec limiteur de température.

Selon une autre variante, le corps de l'organe mélangeur est totalement intégré au groupe d'injection ou au bloc mécanique le reliant à la chaudière.

Si cette solution antérieure constitue un compromis intéressant pour les machines à café construites de cette façon, la présente invention permet également de remédier à l'inconvénient des variations de température, mais de façon plus complète de maîtriser entièrement le circuit d'eau chaude par une préparation individuelle rapide de l'eau chaude sans inertie notable et sans déperditions pénalisantes pour chaque circuit et chaque groupe.

EP-A- 0 228 760 divulgue une unité selon le préambule de la revendication indépendante.

La présente invention permet aussi de remédier à cet inconvénient relatif à la non maîtrise de la régulation de la température de l'eau et à d'autres inconvénients de type économique, en fournissant d'une part un groupe d'injection de structure simple, économique, et facile à monter et d'autre part en simplifiant considérablement et en rendant indépendante la production et la régulation de l'eau chaude par une chaudière individuelle de faible coût.

A cet effet, l'invention se rapporte à une unité individuelle, complète et autonome pour la préparation du café du type "expresso" comprenant une chaudière individuelle et un groupe d'injection allégé.

Cette unité est caractérisée en ce qu'elle se compose d'un groupe simplifié d'injection du café alimenté en eau chaude par une chaudière individuelle reliée hydrauliquement au groupe d'injection correspondant par une liaison hydraulique souple à travers une vanne de commande et en ce que le groupe simplifié d'injection est composé d'une succession de pièces assemblées formant une chambre intérieure et montées directement sur la plaque inférieure du fronton avant de la machine, la liaison hydraulique souple se terminant par une branche alimentant le groupe d'injection à travers la plaque inférieure, succession de pièces assemblées comportant un porte-coupe fixé à cette plaque et terminée par une douchette remplaçant la saillie centrale du support du bloc traditionnel d'injection.

Les avantages de la présente invention dépassent la somme des avantages généraux apportés par chacune des caractéristiques qui la constitue.

La simplicité de constitution et de montage du groupe apporte les avantages de réduction de coût. Les circuits individuels et les chaudières séparées de production instantanée d'eau chaude et les liaisons hydrauliques souples et thermiquement isolantes procurent le maintien de la température idéale pour la préparation successive de nombreuses doses de café.

La structure allégée du groupe d'injection garantit la maîtrise plus simple de la température idéale de l'eau pour la préparation du café.

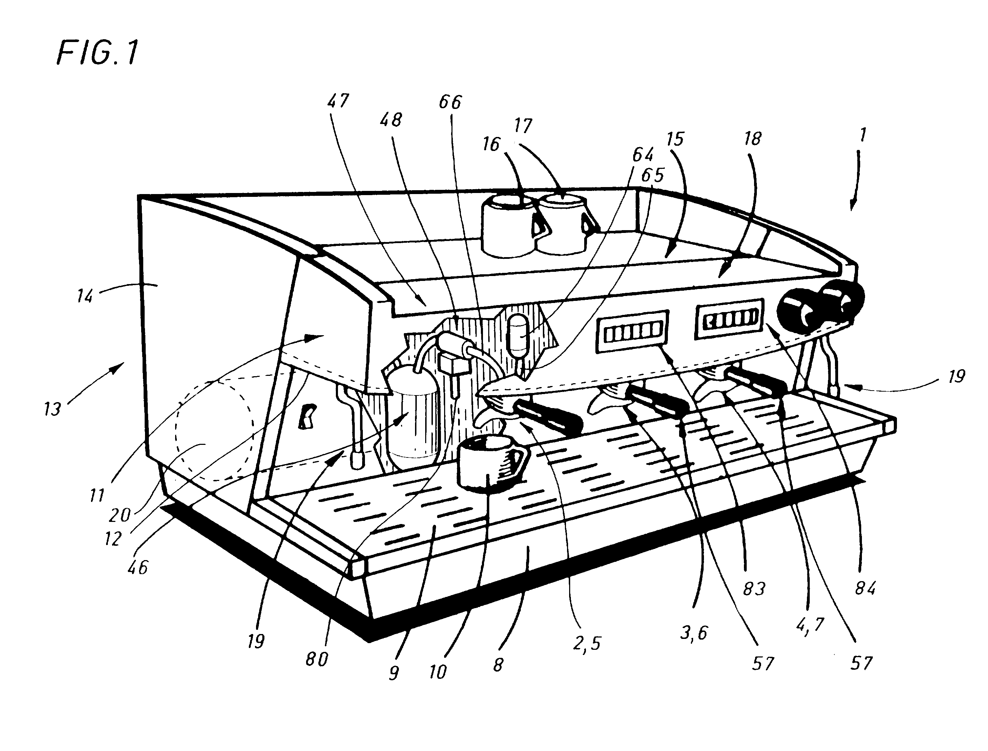

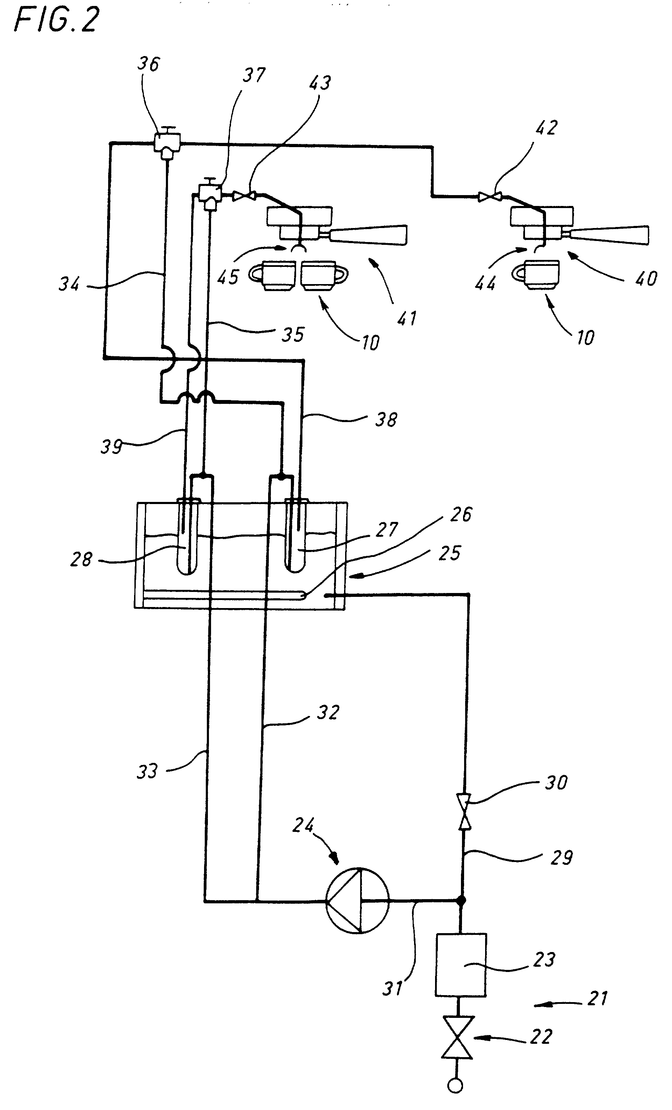

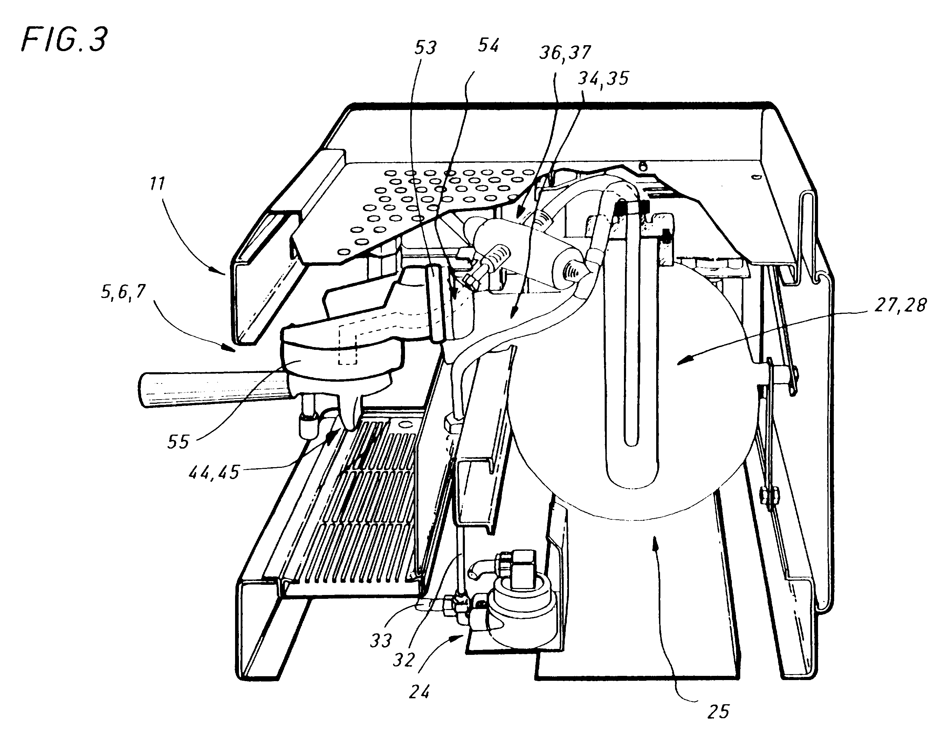

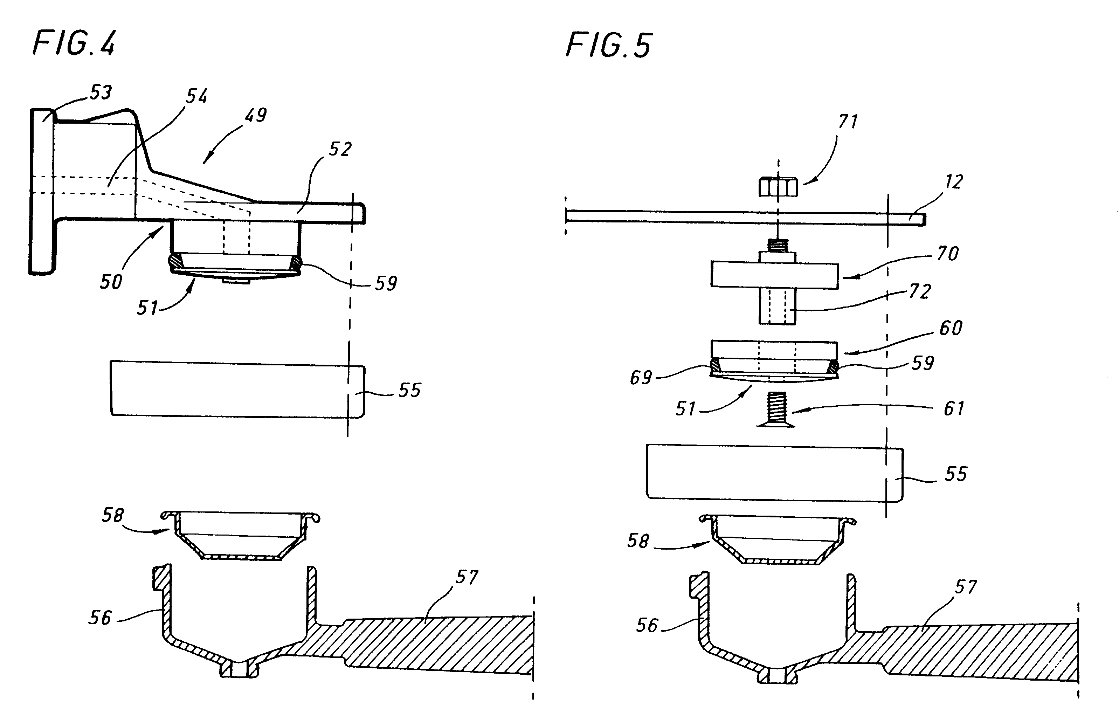

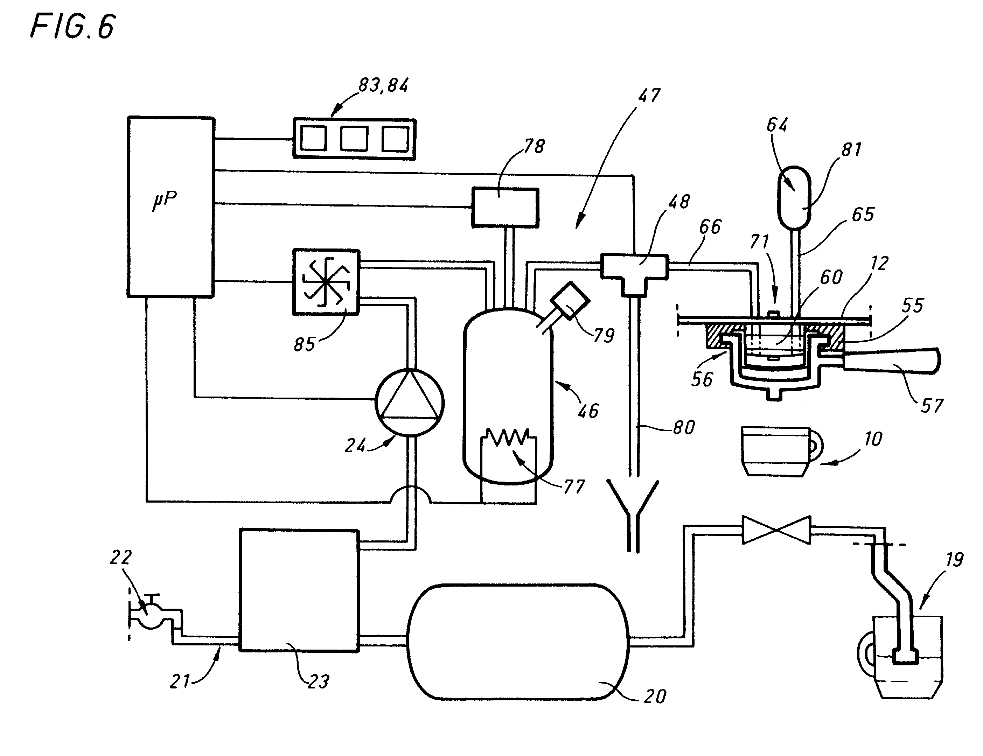

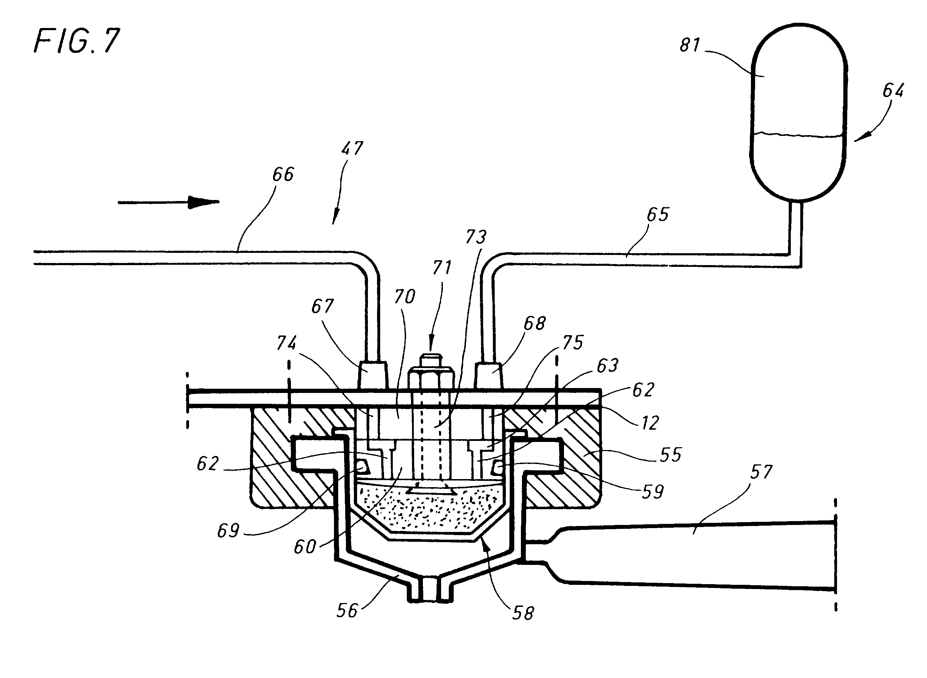

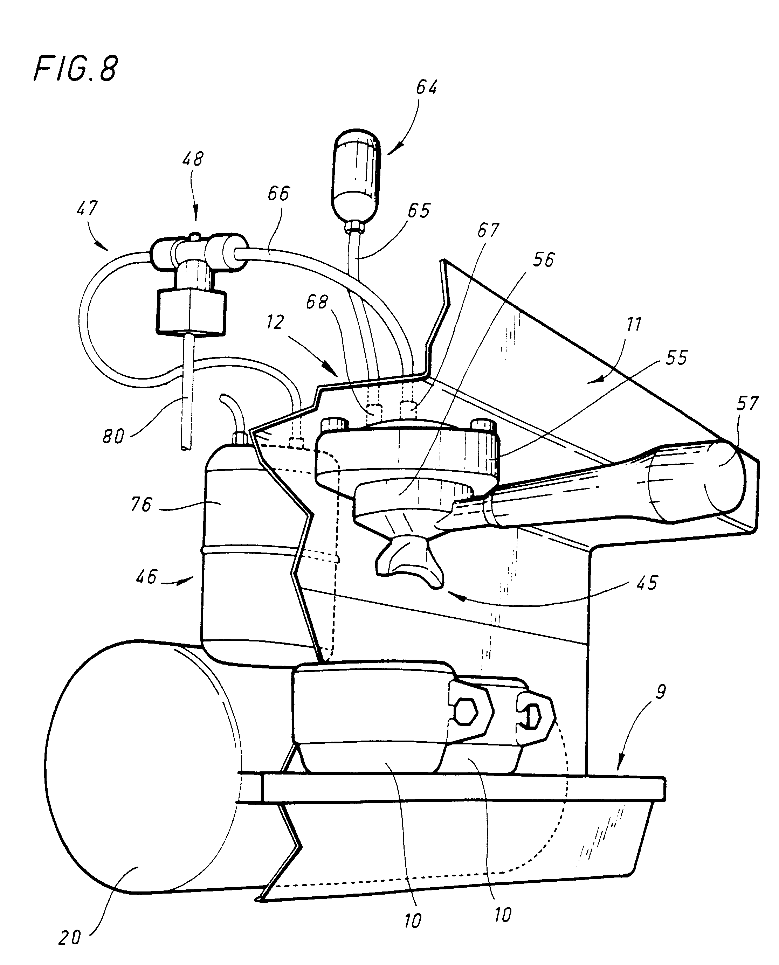

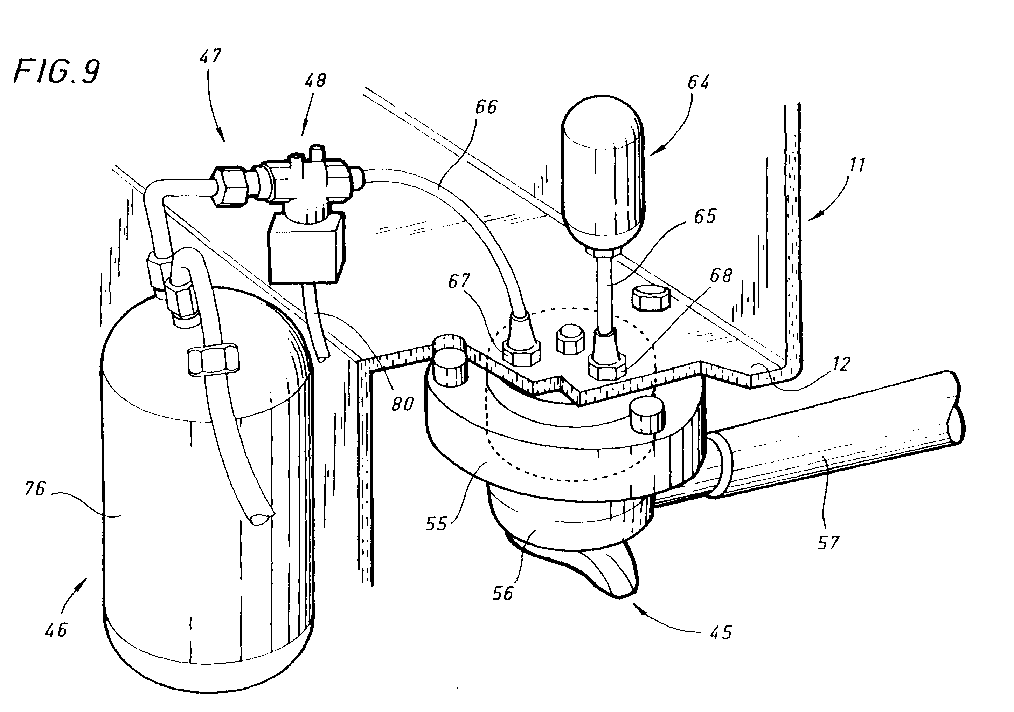

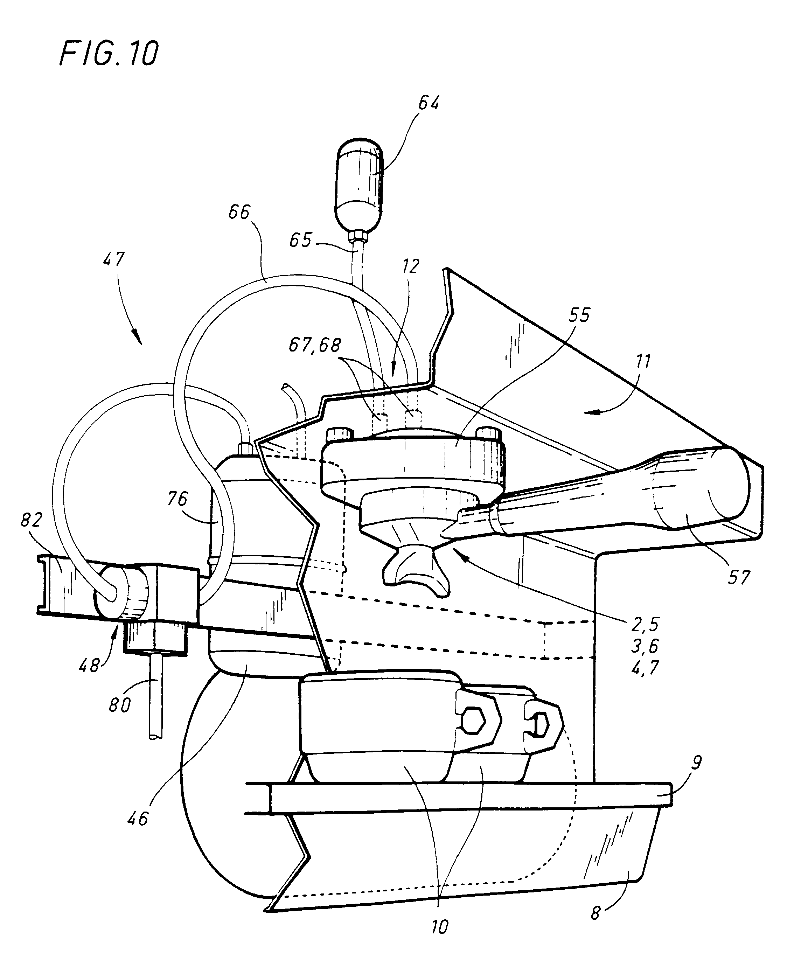

D'autres caractéristiques et avantages de l'invention apparaîtront dans la description qui suit, donnée à titre d'exemple non limitatif et accompagnée des dessins sur lesquels :
. la figure 1 est une vue d'ensemble en perspective montrant la machine à café dit "expresso" avec en brisure une chaudière individuelle et son circuit associé ;
. la figure 2 est le schéma général des circuits d'eau d'une machine à café classique à deux groupes d'injection avec mélangeur ;
. la figure 3 est une vue en perspective d'une partie d'une machine à café classique montrant la chaudière et son environnement ainsi que le groupe d'injection dans la version avec mélangeur sur le circuit de préparation de l'eau chaude ;
. les figures 4 et 5 sont des vues en coupe à l'état dissocié d'un groupe d'injection respectivement d'une machine classique et celui allégé conforme à l'invention ;
. la figure 6 est un schéma illustrant un circuit individuel de préparation du café dans le cadre d'une machine selon l'invention ;
. la figure 7 est une vue en coupe transversale du groupe d'injection allégé ;
. la figure 8 est une vue en perspective de l'avant montrant la partie de la machine propre à un circuit individuel ;
. la figure 9 est une vue en perspective de l'arrière montrant la partie de la machine propre à un circuit individuel ;
. la figure 10 est une vue en perspective montrant le groupe monté sur un exemple de poste de préparation du café présentant un corps de vanne de commande fixé sur un des éléments du bâti de la machine.

La présente invention est destinée à être appliquée à des machines 1 à café dit "expresso" comportant plusieurs postes par exemple 2, 3, 4 de préparation du café à groupe d'injection correspondant 5, 6, 7 telle que celle représentée sur la figure 1.

Ce type de machine présente un châssis 8, avec un plateau inférieur 9 porte-tasses à tasses telles que 10 placées sous les groupes d'injection, un fronton avant 11 à plaque inférieure de base 12 traversée par les blocs des groupes d'injection qui soutiennent chacun un ensemble de lixiviation.

La machine comprend également un bâti 13 habillé par une carrosserie 14 et un plateau supérieur 15 pour le maintien des tasses 16,17 en température à partie supérieure 18 ainsi qu'un ou deux bec(s)-plongeur(s) 19 et leur commande en vue des besoins extérieurs en eau chaude ou en vapeur par exemple de la préparation d'infusions ou pour chauffer le lait.

Concernant la constitution intérieure de la machine, elle doit encore présenter une chaudière centrale 20 pour les besoins extérieurs en eau chaude et en vapeur et une alimentation générale 21 en eau comprenant une admission d'eau à vanne principale 22, un adoucisseur 23 et une pompe d'injection 24. La chaudière centrale 20 est raccordée uniquement au(x) bec(s)-plongeur(s) 19 à travers divers dispositifs de sécurité et de commande (figure 6).

Il faut bien comprendre que la chaudière centrale 20 est la chaudière unique dans le cas d'une machine à café classique. Elle sert, dans une machine à café classique, aussi bien à la préparation de l'eau chaude pour le café qu'à la production d'eau chaude ou de vapeur pour la distribution extérieure.

Comme on peut le voir sur le schéma de la figure 2 présentant les circuits d'une machine classique à deux postes, et sur la figure 3, le chauffage de l'eau de préparation du café s'effectue classiquement dans une chaudière unique 25 à thermoplongeur de chauffage 26 selon le principe du bain marie par l'intermédiaire de cartouches 27,28 plongeant dans l'espace intérieur de la chaudière contenant un plus grand volume d'eau maintenue sous pression à une température constante proche de l'ébullition.

Plus particulièrement, l'arrivée d'eau s'effectue à travers la vanne principale 22 et l'adoucisseur d'eau 23. Le circuit se divise en une branche d'alimentation 29 de la chaudière 25 comportant une vanne d'isolement 30 et en une branche d'alimentation 31 des circuits de préparation de l'eau pour le café à travers la pompe d'injection 24 et deux conduits d'amenée d'eau froide 32,33 aux deux cartouches hermétiques de chauffage 27,28.

Selon la particularité du circuit représenté, les conduits d'eau froide 32,33 se prolongent chacun par des branches annexes 34,35 jusqu'à des organes mélangeurs thermostatiques 36,37 recevant par ailleurs sur leur voie principale par des liaisons hydrauliques 38,39 l'eau chauffée par les cartouches 27,28. L'eau est amenée aux groupes d'injection correspondants 40,41 par des conduits à travers des électrovannes de commande 42,43. Le café se déverse dans la ou les tasse(s) par un bec verseur simple ou double 44,45.

Dans une machine construite avec une pluralité d'unités fonctionnellement indépendantes conformément à l'invention, la chaudière unique 25 des machines antérieures est remplacée par la chaudière centrale 20 destinée spécifiquement à la production de l'eau chaude ou de la vapeur pour les besoins extérieurs autres que la préparation du café "expresso" par exemple pour le thé ou le lait.

La machine à café ainsi construite comporte une pluralité de chaudières individuelles telles que 46, propres à chaque poste de préparation 2,3,4, chacune reliée au groupe d'injection correspondant 5,6,7 par une liaison hydraulique souple telle que 47 à conduit en matière souple, par exemple en matière plastique thermiquement isolante, à travers une électrovanne de commande 48 comme on peut le voir notamment sur la figure 6.

Chaque chaudière individuelle 46 est associée à un groupe d'injection. Elles sont toutes alimentées en parallèle par la pompe unique d'injection 24. Elles sont du type à chauffage instantané et économique permettant de les jeter lors d'une réparation d'entretien mettant en cause la chaudière ou lors d'un défaut de fonctionnement propre à la chaudière individuelle.

Pour mieux apprécier les différences avec l'invention et les simplifications apportées par celle-ci, on examinera d'abord en détail un des groupes d'injection d'une machine classique en référence aux figures 4 et 5.

Le groupe d'injection classique comporte un bloc d'injection 49 massif et métallique à face inférieure plane pourvue d'une saillie centrale d'interface 50 conformée en partie centrale puis usinée dans la masse du bloc d'injection 49. Sur cette saillie 50, qui joue le rôle d'un ensemble d'interface et d'injection et d'organe mécanique pour le léger tassement de la mouture, est rapporté un ensemble de diffusion appelé communément douchette 51.

Le bloc d'injection 49 est un support mécanique massif 52, par exemple en laiton, raccordé par bride 53 au reste du circuit, support dans lequel est percé un conduit d'amenée 54 de l'eau chaude à la douchette à travers la saillie centrale d'interface 50.

La face plane inférieure du bloc d'injection sert de support de fixation à une pièce femelle appelée classiquement porte-coupe 55, c'est-à-dire à une pièce à fonction d'écrou sur laquelle vient se monter à blocage rapide une coupe 56 à manche 57 destinée à contenir une passoire 58 dans laquelle est placé le café moulu en vue de la lixiviation.

La passoire 58 contenue dans la coupe 56 vient se monter sur la saillie centrale 50 permettant de tasser légèrement le café moulu. L'étanchéité entre la saillie 50 et la passoire 58 est réalisée dans la version classique par un joint plat ou de façon originale mais connue, par l'intermédiaire d'un joint torique 59 comme représenté sur les figures 4 et 5.

Selon la présente invention, la particularité du groupe d'injection porte sur l'absence de la pièce de support mécanique massif 52 métallique et onéreuse, constituant le bloc d'injection 49 ayant pour conséquence la fixation directe du porte-coupe 55 sur la sous-face de la plaque inférieure 12 du fronton avant 11 et la réalisation de la saillie centrale d'interface 50 sous la forme d'un assemblage de pièces comme on le verra ci-après.

Le porte-coupe 55 sur lequel la coupe 56 vient se monter est fortement solidarisé directement à la plaque inférieure 12 de sous-face du fronton avant 11.

Cette fixation s'avère de solidité largement suffisante pour résister aux efforts de manoeuvres de montage ou de libération de la coupe 56 sur son support porte-coupe 55.

La particularité du groupe d'injection selon l'invention porte également sur le raccordement direct de la ligne d'amenée d'eau sur l'ensemble d'interface et d'injection et sur l'existence d'une capacité hydropneumatique reliée hydrauliquement à l'ensemble d'interface et d'injection.

En référence aux figures 5 et 7, chaque groupe d'injection et d'interface de la machine à café constituée par plusieurs unités fonctionnellement indépendantes et juxtaposées se compose des pièces individuelles amovibles suivantes présentes entre la passoire 58 et la sous face de la plaque inférieure 12 du fronton avant 11.

On distingue d'abord une pièce d'injection 60 qui assure la transmission de l'eau chaude au café par le diffuseur ou douchette 51. Elle présente un front avant sur lequel est fixée la douchette, par exemple par une vis 61. Sur ce front avant débouchent une pluralité de canaux longitudinaux 62 d'amenée de l'eau dont la pièce d'injection est traversée, canaux 62 en communication vers le haut avec une chambre annulaire supérieure de distribution 63 alimentée en eau chaude par le conduit souple d'amenée 47 et en liaison hydraulique avec une capacité hydropneumatique 64 à travers une pièce intermédiaire (figure 7).

Les liaisons hydrauliques 65 et 66 existant d'une part entre la capacité hydropneumatique 64, l'électrovanne 48 et le nouveau groupe d'injection ainsi constitué et d'autre part entre l'électrovanne 48 et ce groupe d'injection sont également réalisées par des conduits souples, de préférence en matière plastique thermiquement isolante, dont les extrémités d'injection sont raccordées à l'ensemble d'interface et d'injection par des raccords 67,68, par exemple d'un côté filetés et de l'autre à emmanchement.

Cette pièce d'injection 60 assure également l'étanchéité avec la passoire par exemple par une gorge périphérique 69 dont la surface latérale est garnie du joint torique 59 comme il apparait sur les figures 4 et 5.

L'ensemble d'interface et d'injection est fixé à la plaque inférieure 12 par l'intermédiaire d'une pièce intercalaire appelée entretoise 70 assurant les fonctions d'entretoise et d'applique, sous la forme d'un disque appliqué contre la plaque inférieure 12 de sous-face du fronton avant 11 et fixé contre cette plaque par un couple vis-écrou traversant 71.

Cette entretoise 70 se poursuit en partie centrale vers le bas par un tronçon 72 fileté intérieurement pour la réception de la vis 61 de fixation de la douchette 51.

La pièce porte-coupe 55 est fixée, par exemple en trois points par d'autres couples vis-écrou à la sous face de la plaque inférieure 12 de sous-face du fronton avant 11.

Cette constitution et ce mode de montage et de fixation désolidarisable, particulièrement simples apportent toute la solidité mécanique nécessaire ainsi que divers avantages spécifiques propres à l'entretien et au remplacement des pièces.

Le disque formant l'entretoise 70 est percé de part en part de trois conduits dont un premier conduit central 73 pour l'élément de fixation à la plaque inférieure 12 de sous-face du fronton avant 11, un deuxième conduit excentré 74 pour l'injection de l'eau chaude et un dernier conduit 75, par exemple, mais non nécessairement, diamétralement opposé au deuxième conduit pour la liaison avec la capacité hydropneumatique 64 (figure 7).

Ces conduits communiquent hydrauliquement avec la chambre annulaire de distribution 63 de la pièce d'injection puis avec la douchette par les canaux de distribution 62.

Les figures 4 et 5 illustrent la réelle simplification entre la technique précédente mettant en oeuvre de grosses pièces-support en laiton raccordées par bride 53 formant le bloc mécanique d'injection 49 sur lequel était fixé le porte-coupe 55 et une constitution par un simple assemblage de pièces dissociables conformément à l'invention.

Afin de permettre d'obtenir une eau chaude à température constante sur la zone d'injection dans la chambre annulaire de distribution 63 sans subir les inconvénients de l'inertie thermique des masses métalliques des circuits et du bloc d'injection, on prévoit que chaque chaudière individuelle alimentant chaque groupe d'injection du café est de petite contenance, par exemple un litre, et on prévoit des conduits de distribution souples en matière plastique thermiquement isolante jusqu'au point d'injection dans le café. De même, les pièces constituant l'ensemble d'injection sont réalisées en matière plastique thermiquement isolante.

L'utilisation de ces conduits en matière plastique thermiquement isolante ne procure aucune variation sensible de température entre celle de sortie de la chaudière et la température au point d'injection.

Ces pièces peuvent être facilement stabilisées thermiquement à la température optimale de lixiviation par un moyen de chauffage, par exemple une résistance électrique mince (non représentée), appliquée ou fixée sur la plaque inférieure 12 dans la zone de montage du groupe d'injection.

Plus particulièrement en ce qui concerne la chaudière individuelle, il s'agit d'une chaudière dite à chauffage instantané de petite contenance formée d'un récipient fermé 76 de petit volume présentant au moins un élément chauffant thermoplongeur 77, un capteur de régulation 78 associé à la commande du moyen de chauffage et un capteur de sécurité 79 limitant la température en dessous d'une valeur estimée dangereuse.

Cette association parfaitement originale de moyens est devenue une réalité industrielle car on peut fabriquer, à un moindre coût, de telles petites chaudières individuelles de petite contenance permettant d'envisager leur remplacement complet par simple substitution.

La machine à café décrite est constituée par la juxtaposition de plusieurs unités individuelles et fonctionnellement indépendantes de préparation du café. On peut l'utiliser seule, sans mettre en oeuvre l'énergie complète de la machine. On peut aussi régler une unité de préparation selon des conditions spéciales de fonctionnement sans perturber les autres unités.

Chaque chaudière individuelle 46 alimente un groupe d'injection par le simple conduit souple 47 prolongé par son extrémité 66 en matière plastique thermiquement isolante à travers l'électrovanne de commande 48 jusqu'au point d'injection dans le café, c'est-à-dire à la sortie de la douchette 51.

L'électrovanne 48 présente deux voies dont une voie retour avec évacuation par un tronçon de décharge 80.

L'utilisation pour ces conduits d'une matière plastique thermiquement isolante permet d'éviter une variation sensible de température entre celle de sortie de chaudière et la température au point d'injection.

Le deuxième avantage important de l'invention concerne la grande simplification de construction du groupe d'injection.

Il n'existe plus de masses métalliques importantes destinées à apporter la solidité mécanique de l'ensemble.

Le porte-coupe 55 sur lequel la coupe 56 vient se monter est fortement solidarisé directement à la plaque inférieure 12 de sous-face du fronton avant 11.

Cette fixation s'avère suffisante pour les manoeuvres de verrouillage ou de libération de la coupe 56 sur son support porte-coupe 55.

On examinera maintenant la capacité hydropneumatique 64 et sa fonction dans le circuit de distribution de l'eau chaude pour la préparation du café.

Il s'agit d'un contenant 81 de petite capacité, de préférence métallique sous la forme d'une mini-bonbonne fermée, reliée de façon étanche au circuit de distribution au niveau de la chambre annulaire de distribution 63 de la pièce d'injection 60.

Le volume intérieur de cette mini-bonbonne formant la capacité hydropneumatique est libre mais fermé et étanche, si bien qu'elle agit à la manière d'un amortisseur hydropneumatique.

Elle travaille de deux façons différentes. En compression, elle permet d'amoindrir les à-coups de pression provenant de la pompe d'injection 24 car le volume intérieur étanche rempli d'air fait office de tampon pneumatique lors des montées instantanées en pression au début de la préparation du café, constituée généralement d'une phase initiale courte de prémacération, suivie de la lixiviation continue. Ces deux phases étant séparées par un léger temps mort, le créneau initial de pression ainsi que la montée ultérieure en pression sont amorties par la capacité hydropneumatique 64.

La capacité hydropneumatique 64 travaille aussi en détente, ce qui permet lors de l'arrêt de la pompe d'injection 24, alors que la capacité a été gonflée par la surpression de lixiviation, de restituer cette énergie au circuit pour chasser l'eau inutilisée ou une partie de celle-ci vers la décharge à travers l'électrovanne de commande 48 passante vers l'évacuation par le conduit 80 de décharge.

L'unité de préparation selon l'invention comporte une autre originalité.

Chaque électrovanne de commande 48 est fixée en applique contre un des éléments métalliques du corps de la machine qui est utilisé comme dissipateur thermique. Cette dissipation permet d'éviter la surchauffe du corps de la vanne, ce qui améliore le maintien à la température idéale de l'eau de préparation du café.

Comme élément du corps de la machine sur lequel est montée l'électrovanne 48, il peut s'agir du corps de la chaudière individuelle 46, d'un longeron 82 de face avant du bâti, d'une traverse ou d'un composant du châssis de dimension suffisante pour présenter une bonne surface de dissipation thermique comme on peut le voir sur la figure 10.

La machine peut être purement manuelle ou semi-automatique avec commande par des claviers à touches tels que 83,84.

Avant d'expliquer le fonctionnement, on décrira en référence à la figure 6 le schéma général d'un poste complet de préparation du café "expresso".

Après passage dans l'adoucisseur 23 qui comporte une sortie supplémentaire pour la chaudière centrale 20, l'eau froide est admise dans la pompe d'injection 24 dont la sortie alimente chaque chaudière individuelle 46 à travers un compteur individuel d'eau 85.

Chaque chaudière individuelle est reliée hydrauliquement au groupe d'injection correspondant par la liaison hydraulique 47 comprenant la vanne de commande 48 à trois voies avec évacuation.

L'ensemble du fonctionnement est commandé et géré par un microprocesseur µP à partir de claviers 83,84 situés sur le fronton avant 12 de la machine et des informations de quantité d'eau fournies sous forme codée par le compteur individuel d'eau 85 en prenant en compte les valeurs du capteur de température 78 de la chaudière individuelle 46.

Au cours du cycle de fonctionnement, le microprocesseur µP agit sur la pompe d'injection 24 et sur l'électrovanne de commande selon un programme interne spécifique à la machine à partir de commandes reçues du ou des clavier(s) 83,84 correspondant(s). Il pilote notamment le chauffage de la chaudière individuelle à l'aide du capteur 78 en vue du maintien de la température de l'eau à une valeur constante prédéterminée. Il reçoit les commandes de petite ou de grande dose à partir du clavier.

On décrira maintenant un cycle de fonctionnement sur un circuit de préparation du café.

Les commandes manuelles de marche et de choix de la dose sur les touches du clavier font débuter la séquence de fonctionnement pour la préparation d'une dose de café suffisante pour une ou deux tasses.

La séquence se déroule de la façon suivante.

Le microprocesseur µP enregistre les commandes puis autorise l'ouverture de l'électrovanne 48 et la marche de la pompe 24 dont le débit d'eau provoque le fonctionnement du compteur d'eau 85. Les valeurs élémentaires de quantité d'eau comptées sont transmises par impulsions au microprocesseur et enregistrées par celui-ci. Lorsque la quantité d'eau correspondant à la dose commandée est atteinte, le microprocesseur stoppe la pompe 24 et ferme la voie principale de l'électrovanne entre la chaudière 46 et le groupe d'injection correspondant en ouvrant simultanément la voie vers le conduit de décharge 80.

L'eau chaude en quantité voulue passe sur le café moulu et ressort en extrait liquide pour venir remplir la ou les tasses placées sous le groupe.

Après injection de la quantité d'eau chaude dans le café et baisse de la pression consécutive à l'arrêt de la pompe 24, l'eau retenue dans la capacité pneumatique vient se vider par décompression, à travers la branche terminale du circuit, puis est évacuée à travers l'électrovanne de commande et le conduit 80 de décharge.

La poussée de décharge par le conduit 65 de la capacité hydropneumatique 64 assure l'évacuation de l'eau résiduelle évitant ainsi tout mélange avec l'eau chaude d'une nouvelle dose.

## Revendications

1. Unité individuelle de préparation et de distribution du café pour machine à café du type dit "expresso" comprenant un ou plusieurs postes de préparation du café (2,3,4), l'eau servant à la préparation du café étant chauffée par des moyens électriques, un fronton avant (11) terminé vers le bas par une plaque inférieure (12) caractérisée en ce qu'elle se compose d'un groupe simplifié d'injection (41) du café alimenté en eau chaude par une chaudière individuelle (46) reliée hydrauliquement au groupe d'injection correspondant par une liaison hydraulique souple (47) à travers une électrovanne de commande (48) et en ce que le groupe simplifié d'injection (41) est composé d'une succession de pièces assemblées formant une chambre intérieure et montées directement sur la plaque inférieure (12) du fronton avant (11) de la machine, la liaison hydraulique souple (47) alimentant le groupe d'injection à travers la plaque inférieure (12), succession de pièces assemblées comportant un porte-coupe (55) fixé à cette plaque (12) et terminée par une douchette (51) remplaçant la saillie centrale du support du bloc traditionnel d'injection.

2. Unité individuelle de préparation du café pour machine à café selon la revendication 1 caractérisée en ce que chaque groupe d'injection reçoit d'une part une première liaison hydraulique souple (66) provenant de la chaudière individuelle (46) à travers une électrovanne de commande (48) et d'autre part une deuxième liaison hydraulique souple (65) provenant d'une capacité hydropneumatique (64).

3. Unité individuelle de préparation du café selon la revendication 2 caractérisée en ce que la capacité hydropneumatique (64) est un volume fermé et étanche en liaison hydraulique avec la chambre intérieure du groupe d'injection.

4. Unité individuelle de préparation du café selon la revendication précédente caractérisée en ce que le corps de l'électrovanne de commande (48) du groupe d'injection est fixé en applique sur un des éléments du châssis (8) de la machine ou sur le corps de la chaudière individuelle (46).

5. Unité individuelle de préparation du café selon la revendication 1 caractérisée en ce que chaque groupe d'injection recevant les deux conduits en matière souple, l'un (66) provenant de la chaudière individuelle (46) et l'autre (65) d'une capacité hydropneumatique (64) se compose d'un assemblage de pièces terminées par une douchette (51), assemblage de pièces remplaçant la saillie centrale (50) présente au niveau de la zone centrale de l'ancien support du groupe d'injection et qui se compose successivement d'une entretoise (70), d'une pièce d'injection (60) et d'une douchette (51) ces deux dernières étant maintenues entre elles par une vis (61) et l'entretoise (70) étant appliquée et fixée à la plaque inférieure (12) du fronton avant (11) par un ensemble vis-écrou (71) et en ce que cet assemblage de pièces ainsi que le porte-coupe (55) sont fixés sur la plaque inférieure (12) du fronton avant.

6. Unité individuelle de préparation du café selon la revendication 5 caractérisée en ce que la pièce d'injection (60) présente un front avant sur lequel est fixé la douchette (51), par la vis (61), front sur lequel débouchent des canaux longitudinaux (62) se prolongeant sur l'autre face par une chambre annulaire (63) alimentée en eau chaude par les conduits souples (65) et (66) au moyen de raccords (67,68) à travers l'entretoise (70) qui se poursuit vers le bas en partie centrale par un tronçon (72) fileté intérieurement pour le montage de la vis (61) de fixation de la douchette (51).

7. Unité individuelle de préparation du café selon les revendications 5 et 6, caractérisée en ce que l'entretoise (70) est traversée par trois conduits dont un premier conduit central (73) pour l'élément de fixation à la plaque inférieure (12) du fronton avant (11), un deuxième conduit excentré (74) pour l'injection de l'eau chaude et un dernier conduit (75) pour la liaison avec la capacité hydropneumatique (64).

8. Unité individuelle de préparation du café selon l'une quelconque des revendications précédentes caractérisée en ce que les pièces composant chaque groupe d'injection sont en matière plastique.

9. Unité individuelle de préparation du café selon la revendication 1 caractérisée en ce que chaque chaudière individuelle (46) est une chaudière du type à chauffage instantané.

10. Unité individuelle de préparation du café selon l'une quelconque des revendications 5 à 8 caractérisée en ce qu'une résistance électrique de maintien en température est appliquée sur la face inférieure (12) du fronton avant (11) dans la zone de montage du groupe.

11. Unité individuelle de préparation du café selon la revendication 5 ou 6, caractérisé en ce que le moyen de fixation de la douchette (51) est fractionné en deux éléments dont un couple vis-écrou (71) traversant l'assemblage de pièces et un tronçon (72) fileté intérieurement en dessous de l'entretoise (70) sur l'extrémité inférieure de laquelle vient se fixer la vis d'assemblage (61), le tronçon (72) étant une prolongation centrale de l'entretoise (70).

12. Unité individuelle de préparation du café selon la revendication 5, caractérisé en ce que le raccordement des liaisons hydrauliques (65) et (66) à la capacité hydropneumatique (64) s'effectue à travers la plaque inférieure (12) et par l'intermédiaire de raccords (67,68).

## Patentansprüche

1. Individuelle Einheit zum Zubereiten und Zuteilen von Kaffee für eine Kaffeemaschine nach Art einer Espressomaschine mit einer oder mehreren Zubereitungsstellen (2, 3, 4) für den Kaffee, wobei das zur Zubereitung des Kaffees dienende Wasser durch elektrische Mittel erhitzt wird und mit einem Frontteil (11), das nach unten von einer unteren Platten (12) begrenzt ist, dadurch gekennzeichnet, daß sie aus einem vereinfachten Kaffee-Injektionssatz (41) zusammengesetzt ist, der von einem individuellen Kessel (46), welcher mit dem entsprechenden Injektionssatz durch eine nachgiebige hydraulische, ein Steuer-Elektroventil (48) durchsetzende Verbindung (47) verbunden ist, mit heißem Wasser versorgt ist, und daß der vereinfachte Injektionssatz (41) aus einer Folge von aneinandergefügten, eine innere Kammer bildenden und unmittelbar auf der unteren Platte (12) des Frontteils (11) der Maschine angeordneten Gliedern zusammengesetzt ist, wobei die nachgiebige hydraulische Verbindung den Injektionssatz durch die untere Platte (12) versorgt und die Folge von aneinandergefügten Gliedern einen an dieser Platte (12) befestigten Tassenträger (55) aufweist, der in einen Sprühkopf mündet, welcher den zentralen Tragansatz einer herkömmlichen Injektionseinheit ersetzt.

2. Individuelle Einheit zum Zubereiten von Kaffee für eine Kaffeemaschine nach Anspruch 1, dadurch gekennzeichnet, daß jeder Injektionsansatz einerseits mit einer ersten von dem individuellen Kessel (46) ausgehenden, das Steuer-Elektroventil durchsetzenden nachgiebigen hydraulischen Verbindung (66), andererseits mit einem zweiten, von einem hydropneumatischen Speicher (64) ausgehenden Verbindung (65) ausgestattet ist.

3. Individuelle Einheit zum Zubereiten von Kaffee nach Anspruch 2, dadurch gekennzeichnet, daß der hydropneumatische Speicher (64) ein dicht abgeschlossenes, mit der inneren Kammer des Injektionssatzes hydraulisch verbundenes Volumen ist.

4. Individuelle Einheit zum Zubereiten von Kaffee nach dem vorangehenden Anspruch, dadurch gekennzeichnet, daß der Körper des Steuer-Elektroventils (48) des Injektionsatzes auf einem der Elemente des Grundrahmens (8) der Maschine oder auf dem Körper des individuellen Kessels (46) aufliegend befestigt ist.

5. Individuelle Einheit zum Zubereiten von Kaffee nach Anspruch 1, dadurch gekennzeichnet, daß jeder Injektionssatz, der mit den beiden Leitungen aus einem nachgiebigen Material, von denen eine von dem individuellen Kessel (46) und die andere von dem hydropneumatischen Speicher (64) ausgeht, ausgestattet ist, von der Zusammenfügung der in einen Sprühkopf (51) mündenden Glieder zusammengesetzt ist, wobei die Zusammenfügung der Glieder, die am zentralen Ansatz (50) ersetzt, auf der Höhe des zentralen Bereichs eines herkömmlichen Trägers des Injektionssatzes angeordnet ist und sukzessive aus einem Distanzring (70), einem Injektionsglied (60) und dem Sprühkopf (51) zusammengesetzt ist, von denen die beiden letztgenannten mittels einer Schraube (61) aneinander gehalten sind und der Distanzring (70) an der unteren Platte (12) des Frontgiebels (11) mittels einer Schrauben-Mutter-Anordnung (71) angesetzt und befestigt ist, und daß diese Zusammenfügung der Glieder wie auch der Tassenträger (55) an der unteren Platte (12) des Frontteils befestigt sind.

6. Individuelle Einheit zum Zubereiten von Kaffee nach Anspruch 5, dadurch gekennzeichnet, daß das Injektionsglied (60) eine Stirnseite aufweist, an der der Rieselkopf (51) mittels der Schraube (61) befestigt ist und in die Längsdurchbrüche (62) einmünden, an welche sich an der anderen Seite ein Ringraum (63) anschließt, der von den nachgiebigen Leitungen (65, 66) mittels Anschlußstutzen (67, 68) quer durch den Distanzring (70), mit Wasser versorgt ist wobei der Dinstanzring (70) in seinem zentralen Bereich nach unten von einem mit einem Innengewinde zum Zusammenbau mittels der Schraube (61) und zum Befestigen des Rieselkopfs (51) versehenen Endstück (72) fortgesetzt ist.

7. Individuelle Einheit zum Zubereiten von Kaffee nach Anspruch 5 oder 6, dadurch gekennzeichnet, daß der Distanzring (70) von drei Durchbrüchen durchsetzt ist, nämlich einem ersten zentralen Durchbruch(73) für das Befestigungselement zum Festlegen an der unteren Platte (12) des Frontgiebels (11), einem zweiten exzentrischen Durchbruch (74) zum Injizieren von heißem Wasser und einem letzten Durchbruch (75) für die Verbindung mit dem hydropneumatischen Speicher (64).

8. Individuelle Einheit zum Zubereiten von Kaffee nach einem der vorangehenden Ansprüche, dadurch gekennzeichnet, daß die Glieder, aus denen jeder Injektionssatz zusammengesetzt ist, aus Kunststoff bestehen.

9. Individuelle Einheit zum Zubereiten von Kaffee nach Anspruch 1, dadurch gekennzeichnet, daß jeder individuelle Kessel (46) ein Schnellheizkessel ist.

10. Individuelle Einheit zum Zubereiten von Kaffee nach einem der Ansprüche 5 bis 8, dadurch gekennzeichnet, daß ein elektrischer Widerstand zum Halten der Temperatur an der unteren Seite (12) des Frontteils (11) im Befestigungsbereich des Injektionssatzes angeordnet ist.

11. Individuelle Einheit zum Zubereiten von Kaffee nach Anspruch 5 oder 6, dadurch gekennzeichnet, daß das Befestigungsmittel für den Sprühkopf (51) aus zwei Elementen besteht, nämlich einem die Zusammenfügung der Glieder durchsetzenden Schrauben-Muttern-Paar (71) und dem mit einem Innengewinde versehenen Endstück (72) unterhalb des Distanzrings (70), an dessen unteren Ende die Befestigungsschraube (61) festgelegt ist, wobei das Endstück (72) als eine zentrale Verlängerung des Distanzrings (70) ausgebildet ist.

12. Individuelle Einheit zur Zubereitung von Kaffee nach Anspruch 5, dadurch gekennzeichnet, daß der Anschluß der hydraulischen Verbindungen (65, 66) an den hydropneumatischen Speicher (64) sich quer durch die untere Platte (12) und durch die Anschlußstutzen (67, 68) erstreckt.

## Claims

1. An individual unit for the preparation and distribution of coffee for an "expresso" type of coffeemaker, comprising several coffee preparation units (2,3,4), wherein the water used for preparing coffee is electrically heated, with a lower front portion (11) terminating in a lower plate (12), characterized in that it comprises a simplified coffee injection group (41) supplied with hot water by an individual heating unit (46) hydraulically connected to the corresponding injection group by a flexible hydraulic connector (47) through a control valve (48), and further in that the simplified injection group (41) is composed of a succession of assembled elements forming an interior chamber, attached directly to the lower plate (12) of the front portion (11) of the machine, said flexible hydraulic connector (47) supplying the injection group through the lower plate (12), and said succession of assembled elements comprising a holder (55) for a container attached to said plate (12), and ending in a spray (51) replacing the central projection on the block support of a conventional injection block.

2. An individual coffee preparation unit according to claim 1, characterized in that each injection group first receives a first flexible hydraulic connector (66) extending from the individual heating unit (46) through an electrovalve control (48), and secondly a second flexible hydraulic connector (65) extending from the hydropneumatic storage (64).

3. An individual coffee preparation unit according to claim 2, characterized in that the hydropneumatic storage (64) is a closed unit which is sealed and hydraulically connected to the interior chamber of the injection group.

4. An individual coffee preparation unit according to the preceding claim, characterized in that the injection group electrovalve control (48) is in contact with one of the elements of the chassis (8) of the machine or with the individual heating unit (46).

5. An individual coffee preparation unit according to claim 1, characterized in that each injection group receiving the two flexible conduits, i.e., the conduit (66) extending from the individual heating unit (46) and the other conduit (65) from a hydropneumatic storage (64), is composed of an assemblage of elements ending in a spray element (51), which assemblage of elements replaces the central projection (50) located at the level of the central region of the former injection group support, and which assemblage of elements consists , in succession, of a crosspiece (70), an injection piece (60) and a spray element (51), the latter two being connected to each other by a screw (61), and the crosspiece (70) being in contact with and attached to the lower plate (12) of the front portion (11) by a screw-pin connection (71), and in that this assemblage of elements, as well as the container holder (55), are attached to the lower plate (12) of the front portion.

6. An individual coffee preparation unit according to claim 5, characterized in that the injection element (60) has a front portion to which the spray element (51) is attached with the screw (61), with some longitudinal channels (62) opening onto it, extending on the other surface onto an annular chamber (63) supplied with hot water through the flexible conduits (65) and (66) by means of connections (67,68) through the crosspiece (70), the lower central portion of which has an interiorly threaded portion (72) which receives the screw (61) that attaches the spray element (51).

7. An individual coffee preparation unit according to claims 5 and 6, characterized in that both sides of the crosspiece (70) are penetrated by three conduits, namely, a first central conduit (73) for the element attaching the lower plate (12) to the front portions (11), a second excentric conduit (74) for injecting hot water, and a third conduit (75) which connects the hydropneumatic storage (64).

8. An individual coffee preparation unit according to any one of the preceding claims, characterized in that the elements comprising each injection group are made of plastic.

9. An individual coffee preparation unit according to claim 1, characterized in that each individual heating unit (46) is an instant-heat unit.

10. An individual coffee preparation unit according to any one of claims 5 through 8, characterized in that an electyric resistor for temperature maintenance is applied to the lower surface (12) of the front portion (11) in the region where the group is attached.

11. An individual coffee preparation unit according to either claim 5 or claim 6, characterized in that the means which attaches the spray element (51) is divided into two portions, namely, a screw-pin connection (71) and an interiorily threaded portion (72) below the crosspiece (70), and the assembly screw (61) is attached to the lower portion of the crosspiece, the portion (72) being a central extension of the crosspiece (70).

12. An individual coffee preparation unit according to claim 5, characterized in that the flexible water inlet conduits (65) and (66) and the conduit connected to the hydropneumatic storage (64) are connected through the lower plate (12) by means of connectors (67, 68).
